Europäisches Patentamt

(19) European Patent Office

Office européen des brevets

(11) Publication number: **0 033 318**
**B1**

# (12) EUROPEAN PATENT SPECIFICATION

(45) Date of publication of patent specification: **05.02.86**

(21) Application number: **80901144.8**

(22) Date of filing: **04.06.80**

(86) International application number:
**PCT/US80/00690**

(87) International publication number:
**WO 80/02680 11.12.80 Gazette 80/28**

(51) Int. Cl.⁴: **B 64 B 1/50, F 03 D 9/00,**
**F 01 D 25/28, F 03 B 7/00**

(54) TETHERED AIRFOIL WIND ENERGY CONVERSION SYSTEM.

(30) Priority: **04.06.79 US 44934**
**07.12.79 US 101492**

(43) Date of publication of application:
**12.08.81 Bulletin 81/32**

(45) Publication of the grant of the patent:
**05.02.86 Bulletin 86/06**

(84) Designated Contracting States:
**AT CH DE FR GB LI LU NL SE**

(56) References cited: ·
**DE-C- 69 848**
**DE-C- 830 628**
**US-A-2 017 961**
**US-A-3 924 827**
**US-A-4 070 131**
**US-A-4 073 516**
**US-A-4 166 596**

(73) Proprietor:. **BISCOMB, LLOYD I**
**4452 Burlington Place**
**N.W., Washington D.C., 20016 (US)**

(72) Inventor: **BISCOMB, LLOYD I**
**4452 Burlington Place**
**N.W., Washington D.C., 20016 (US)**

(74) Representative: **KUHNEN & WACKER**
**Patentanwaltsbüro**
**Schneggstrasse 3-5 Postfach 1729**
**D-8050 Freising (DE)**

Courier Press, Leamington Spa, England.

## Description

This invention relates to a tethered airfoil wind energy conversion system—"TAWECS"—according to the precharacterizing part of claim 1.

From US—A—4 073 516 a wind turbine power plant of the type referred to above is known comprising a gas-filled airfoil provided with frame means supported by said airfoil and mounting a wind turbine for rotating relative to said airfoil. The wind turbine is provided with two rotors for converting the wind power into mechanical power for generating electrical power by means of a generator. The airfoil is suspended by means of a plurality of tether lines which are fixed at one single point, namely to a suspension body.

The main disadvantage of the device from US—A—4 073 516 is that the wind energy conversion ratio mainly depends on the actual velocity of the wind since the two rotors of the wind turbine cannot accelerate the wind over the actual velocity. The fact of such an acceleration is, however, mainly due to the wind power already present before the wind enters the turbine. So, with small actual wind velocities, the wind energy conversion ratio can only be small with the known device since there is no possibility of additionally increasing the given wind speed, especially in the case where the given wind speed is small.

The problem underlying the invention is, therefore, to provide a tethered airfoil wind energy conversion system, capable of delivering a high power output even with small wind velocities.

The solution of this problem is achieved by the characterizing features of claim 1.

By providing at least three tether lines being angularly widely distributed and separately attached to said airfoil and means for individually increasing or decreasing the length of the tether lines, it is possible to tilt the airfoil into the wind, such that the angle of attack is optimum to maximize the pressure drop across the wind turbine. Because of this tilt of the airfoil the wind velocity in the vent is higher than the environmental wind velocity, and therefore, a substantial increase of the power output even with small wind velocities is possible, since even under these conditions a high pressure drop forming the base of a high power output can be achieved.

A further advantage of the present invention is the stable position of the airfoil in mid-air by providing said tether lines being angularly widely distributed, so that any horizontal or vertical swinging of the airfoil caused by quickly increasing and decreasing wind velocities and/or different wind directions, is avoided.

The subclaims contain preferred embodiments of the invention.

According to claim 11 a maximum power output is achieved by tilting the airfoil at an optimum angle of attack at about 30° from horizontal by the tether control system (TCS).

According to claim 12 the power output is still enlarged by lining the interior side wall of the cylindrical vent with spiral ridges for creating a vortex of the wind passing therethrough.

By providing means for sensing the tension on the tether lines and for admitting or releasing inflating gas to or from the airfoil according to claim 17, an almost constant tension within a pre-selected range on the tether lines can be maintained.

This invention can be fully understood from the following detailed description with reference to the accompanying drawings, in which:

Figure 1 is a diagrammatic elevational view of a first generation TAWECS device, discussed in the "Background" section hereinabove;

Figure 2 is a diagrammatic elevational view of a first embodiment of the TAWECS device of the present invention;

Figures 3a and 3b are plots of predicted performance data for the TAWECS of Figure 2 at two different average wind velocities;

Figure 4 is a top plan view of a modified gas bag base for the TAWECS, in effect a second embodiment thereof;

Figure 5 is a simplified longitudinal vertical sectional view of a multiple wind turbine tethered airfoil wind energy conversion system, taken on line 6—6 of Figure 7. In this version, the individual electrical cables all descend to the ground;

Figure 6 is a schematic diagram of the apparatus of Figure 5;

Figure 7 is a simplified top plan view of the embodiment of Figure 5;

Figure 8 is a simplified, fragmentary top plan view of a first variation, wherein the electrical outputs are combined before a common cable descends to the ground;

Figure 9 is a schematic diagram of the apparatus of Figure 8;

Figure 10 is a simplified, fragmentary top plan view of a second variation, wherein the electrical outputs are beamed to the ground via a microwave transmitter/receiver set; and

Figure 11 is a schematic diagram of the apparatus of Figure 10.

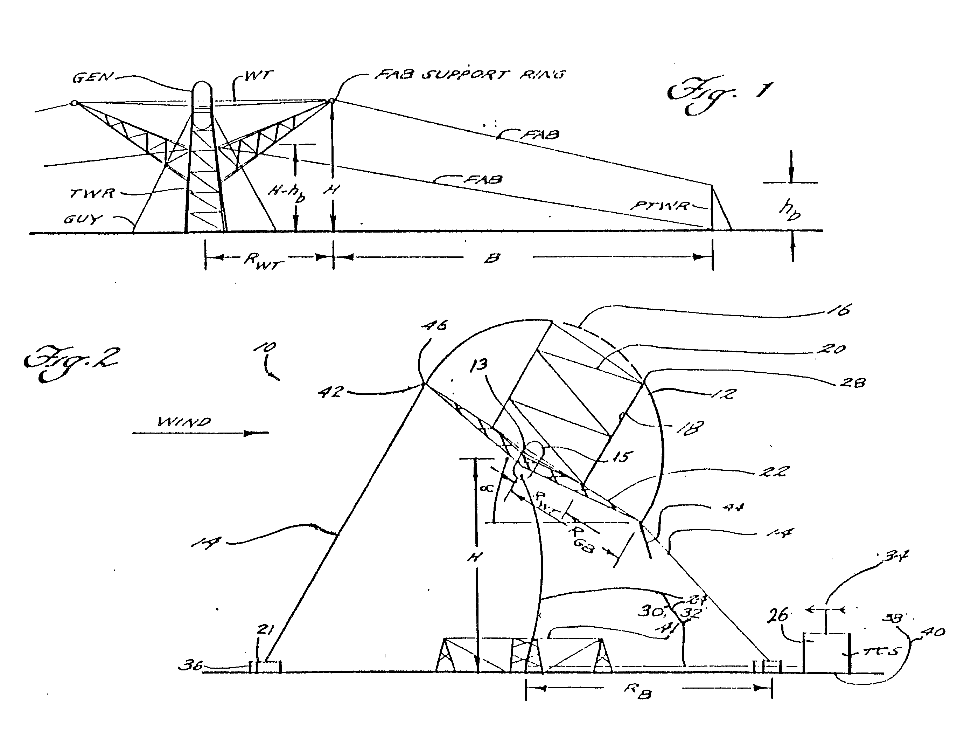

There is shown schematically in Figure 1 an elevational view of a first-generation tethered airfoil wind energy conversion system, which was designed by the present inventor and which is included here for illustrative purposes. Referring to that Figure, the following derivation is made.

Consider the tethered airfoil wind energy conversion system (hereinafter "TAWECS") of Figure 1 to be a large circular airfoil of planform surface area S, and wind passing over it produces lift L. The portion of L that is effective in reducing the air pressure over the TAWECS vent (in which is mounted a conventional wind turbine and electric generator) should be $(A_v/S)L$, where $A_v$ is the area of the vent. Then the RMS decrease in air pressure over the TAWECS vent caused by the wind,

2

$$\overline{\Delta p}=(A_v/S)L \div A_v=L/S \qquad (\text{lb/ft}^2=4.88 \text{ kg/m}^2)$$

The RMS head due to wind input to the TAWECS,

$$\overline{h}=\overline{\Delta p}/\rho=L/S\rho \qquad (\text{ft}=0.305 \text{ m})$$

where $\rho$ is the air density (0.074 lb/ft$^3$=1.185 kg/m$^3$). From O. W. Eshbach, "Handbook of Engineering Fundamentals", 2nd Ed., Wiley, 1952, p. 7—75 to 7—77,

$$C_L=L/(1/2\rho\overline{V}_w^2 S)=(3/20)a$$

where
  $C_L$=coefficient of lift
  $\overline{V}_w$=RMS velocity of wind over the airfoil surface (ft/sec=0.305 m/sec)
    a=maximum camber of airfoil in % of chord
     =(camber/chord) 100
     =2/3 of design $C_L$ in tenths=2/3 $C_L \times 10$

Then
  $L=3/40\ a\rho\overline{V}_w^2 S$     (lb=0.454 kg)
  $\overline{h}=3/40\ a\overline{V}_w^2=\overline{\Delta p}/\rho$     (ft=0.305 m)

The above derivation, which will be useful in the detailed description to follow, does not provide for the local variations in pressure over the airfoil surface. Instead, these calculations were for gross, first order feasibility estimates, using overall or average airfoil properties, and RMS values for the time-varying parameters. (A more detailed analysis using partial differential equations would be required to predict local pressure variations.)

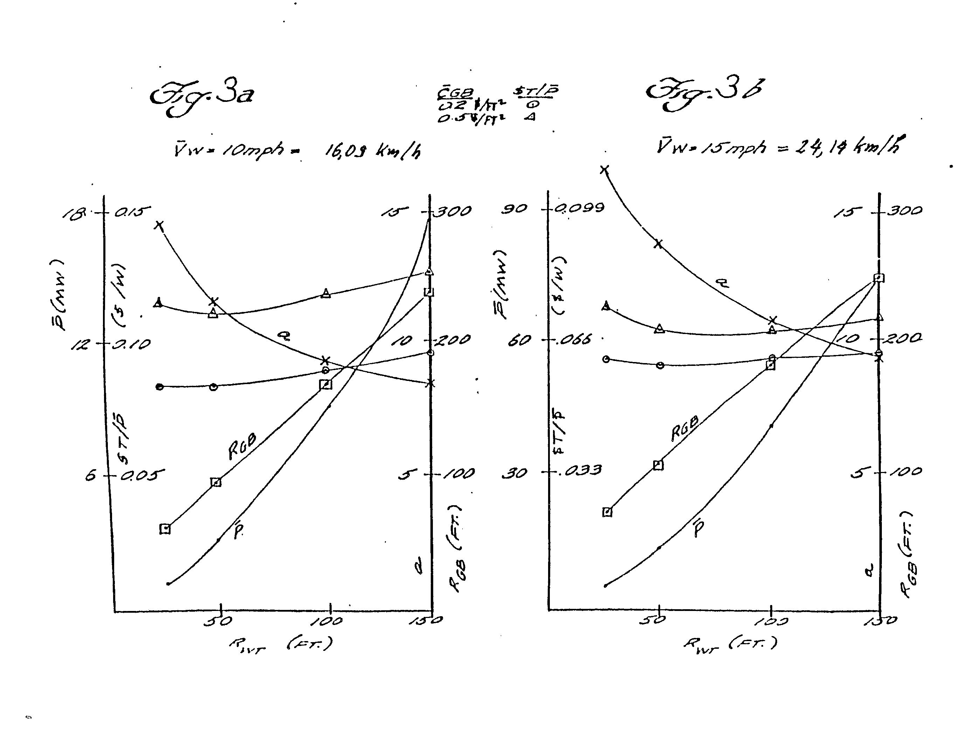

A first embodiment of a tethered airfoil wind energy conversion system, TAWECS, is shown in Figure 2 at 10. In this embodiment, a gas bag airfoil 12 of approximately hemispherical shape is filled with enough lighter-than-air gas, e.g., hydrogen to lift the TAWECS components and provide a moderate tension on three tethers 14. A wind turbine 13—"WT"—is mounted in the bottom center of the gas bag 12, with a cylindrical vent 16 above the wind turbine 13

In a typical such TAWECS configuration, by requiring that the radius of the gas bag ($R_{GB}$) be at least three times the radius of the wind turbine ($R_{WT}$), the cylindrical vent may be tall enough to produce and sustain a confined vortex by lining the interior sidewall 18 of the cylindrical vent with spiral ridges 20 to impart an angular acceleration to the air flowing vertically in the cylindrical vent, as in the vortex generator (VG) described in US—A—4 070 131. The vortex thus produced further reduces the pressure above the wind turbine 13 in addition to the pressure reduction caused by the suction side of the hemispherical airfoil shape of the gas bag.

The gas bag, being flexible, should prevent ice and snow buildup, by being free to deflect in six modes: roll, pitch, yaw, heave, sway, and surge. Since gas bags may be of almost arbitrary size, it is likely that the size limitation is determined by the wind turbine vanes, and 150-foot (=45.72 m) vane are now under development by others. A hemispherical airfoil produces maximum camber/chord ratio, maximizing pressure drop across the wind turbine 13, and thus maximizes power produced.

The hemispherical hydrogen-supported gas bag is tethered by three or more lines 14 (shown in the elevation view of Figure 2 as if there were four), which are adjusted by winches driven by motors 21 controlled by a tether control system (TCS) to control the tilt of the gas bag 12 into the wind, such that the angle of attack $\alpha$ is optimum to maximize the pressure drop across the wind turbine 13. Each tether 14 ends at the outer end of the frame 22 that supports the wind turbine 13 and a generator 15 "GEN" driven by the wind turbine 13. The gas bag is attached to this frame to lift the TAWECS components. In addition to those components already mentioned, a service line 24 is provided from the bottom of the generator 15 to the ground, and along the ground a distance greater than $R_{GB}$, to provide hydrogen replenishment from a hydrogen generator 26 on the ground, power for aircraft warning lights, if required, control signals for a hydrogen release valve 28 in the top of the gas bag, control signals for pitch control of the wind turbine vanes, lightning ground cable 30 and a power output cable 32. Service line 24 may be led along one of the tether lines 14, instead of vertically to the ground as shown in Figure 2. This will enable placing two or more TAWECS one above the other at particularly desirable (windy) sites. The power output cable of service line 24 may be replaced with a microwave transmitter 51 in the TAWECS and a microwave receiver 53 on the ground. A wind direction indicator 34 is required on the ground to supply a wind direction-representing signal to the TCS, which calculates the required lengths of the three tethers 14 to tilt the TAWECS into the wind at its optimum angle of attack $\alpha$ to maximize power output. Control signals are then sent to the three tether winch motor controllers 36 to set the three tether lengths in accordance with these calculations.

The hydrogen generator 26 may be one of several known types, which produce hydrogen by electrolysis of water (possibly obtained from condensed water vapor in the air), or by the process described in US—A—4 075 313, or by other means. (The process for generating hydrogen according to US—A—4 075 313 requires use of at least one of several high temperature subprocesses, one of which is preferably carried out at 750°C—950°C. For those subprocesses requiring temperatures exceeding that obtainable from a rotary mechanical heat generator, either a double convex lens may be used when the sun is available (or some other means of concentrating the sun's rays), or some of the hydrogen generated may be burned to produce the required temperature. Electric heating could be used in the Pangborn process according to US—A—4 075 313 for hydrogen production, and probably would be preferable, connected to the wind turbine driven electric generator [either resistance, arc, or induction heating]. In fact, electric heating may be preferable for all the subprocesses requiring heat, to avoid burning any of the hydrogen produced by the hydrogen generator.)

The hydrogen generator 26 must have a storage tank 38 and reserve capacity enough for a heavy snow or ice load accumulating during a period of no wind, to provide the extra lift required to keep the gas bag aloft with moderate tension on the tethers. The hydrogen generator may supply hydrogen not only to the airfoil, but elsewhere as an end product of the TAWECS. The hydrogen generator may be borne aloft by the airfoil. The TCS must sense tension on the tethers, and open the hydrogen supply valve 40 when tension becomes too low. The TCS must also sense excessive tension on the tethers, and open a release valve 28 in the top of the gas bag to release excess hydrogen to lower the tension on the tethers. The TCS must also provide for manual control of the tether winch motors for use in lowering the TAWECS for maintenance, which would require sufficient control to settle the generator 15 and frame gently into a special cradle 41.

Leading and trailing edge flaps 42, 44, which increase the camber, coefficient of lift, and optimum angle of attack of an airfoil, can be added to the hemispheric gas bag airfoil by adding a metal ring 46 around the base of the gas bag of sufficient strength to support the flaps, and attached to the frame 22 that supports the wind turbine 13 and the generator 15 and connects to the tethers 14. Such a metal ring may be desirable for another reason—to provide tie points for hold-down lines (not shown) or a net (not shown) over the gas bag.

In lieu of an electric generator 15, the wind turbine 13 may drive a flexible shaft (not shown) connected to a mechanical load (not shown) on the ground.

The equation set forth hereabove in regard to the simplified system shown in Figure 1, relating pressure across the WT, airfoil geometry, and wind velocity, may be rewritten;

$\overline{\Delta p / V_w}^2 = 0.075 \, a \, \rho$ and compared with test data for an airfoil approximating a hemisphere, to confirm the derivation. In "Aerofoil Sections", F. W. Riegels, Butterworth, London, 1961, the airfoil with a section closest to that of a hemisphere is the Gö 625, tested at Göttingen in 1941, for which a=10, pressure coefficient $C_p = -1.6$ on the suction side and 0 on the pressure side at 20% of chord (length from leading edge) for a design coefficient of lift $C_L^*$ of 0.075, and α=14° for $C_L$ max of 1.5. From Riegels, p. 275,

$$C_p = \Delta p / q = \Delta p / (1/2 \rho V_w^2)$$

$$\Delta p / V_w^2 = 1/2 \rho C_p$$

Comparing the derivation with regard to Figure 1 for $\overline{\Delta p / V_w}^2$ with test data for this airfoil,

$$0.075 a \rho = 1/2 \rho C_p$$

$$0.15 a = C_p.$$

1.5≈1.6 and the derivation is approximately confirmed. In "Handbook of Airfoil Sections for Light Aircraft", by M. S. Rice, Aviation Publications, Milwaukee, 1971, p. 73 shows the test data for a USA—35A airfoil, with a section closest to that of a hemisphere. No test date is given, but most of the 125 airfoils in the handbook were tested between 1918 and 1937. The USA—35A airfoil has a value of a of 9.35 at 30% of chord, with α=20° for maximum value of $C_L$. No data on $C_p$ are given in M. S. Rice "Handbook of Airfoil Sections for Light Aircraft", as cited above. From the data for these two airfoils, a hemispherical airfoil with a cylindrical central vent, and $R_{GB}=3R_{WT}$, should have a value of a of about 20 at 50% of chord, and an α of about 30°. ($a_{max}$ for a hemisphere=(1/2 r/2r)100=25).

Having confirmed from test data that $\overline{\Delta p / \rho} = 0.075 \, a \, \overline{V_w}^2$, the derivation with regard to Figure 2 for RMS power obtainable from the WT then follows:

$$\overline{P} = \overline{h} \dot{w} c_p$$
$$= \overline{h} A_v V_v \rho c_p$$
$$= \overline{h} A_v (2g\overline{h})^{1/2} \rho c_p$$

where

$\dot{w}$=mass rate of air flow through the WT in lb/sec=0.454 kg/sec

$c_p$=power coefficient of the WT, assumed to be 0.4 from "Wind Machines", by F. R. Eldridge, Mitre Corp., Publication No. MTR-6971, October 1975, p. 55

$A_v$=elliptical area facing the wind of the vent in which the WT is located (i.e., the vertical projection of the circular vent) (ft²=0.092 m²)

4

$V_v$=vertical air velocity in the vent (ft/sec=0.305 m/sec)
$g$=gravitational acceleration=32.2 ft/sec$^2$=9.81 m/sec$^2$

Then

$$\overline{P}=0.0023\ (8.02)\ A_v\overline{h}^{1.5}(0.4)\ \text{(ft lb/sec=0.138 m kg/sec)}$$
$$=0.0184\ A_v\overline{h}^{1.5}(0.4)\ (0.746/550)\ \text{(KW)}$$
$$=0.0000100\ A_v\overline{h}^{1.5}$$
$$=0.0000100\ \pi R_{WT}^2 \sin\alpha(\overline{\Delta p}/\rho)^{1.5}$$
$$=0.000031\ R_{WT}^2 \sin\alpha(0.075\ a\ \overline{V}_w^2)^{1.5}$$
$$=0.000000637\ R_{WT}^2 \sin\alpha(a\ \overline{V}_w^2)^{1.5}\ \text{(KW)}$$

To obtain estimates for plant cost per unit of power produced, the volume of hydrogen required to lift the TAWECS components must first be found from the equation

$$\text{Lift}-W_t=\varepsilon$$

where

$$\text{Lift}=(\text{density}_{air}-\text{density}_{H_2})\ \text{Volume}_{H_2}$$
$$=(0.08071-0.00561)\ \text{Vol}_{H_2}=0.0751\ \text{Vol}_{GB}$$
for the case in which $\text{Vol}_{H_2}$
$$=\text{Vol}_{GB}$$

Then

$$\text{Lift}=0.0751\ (2/3\pi R_{GB}^3-\pi(1.1R_{WT})^2R_{GB})$$
$$=0.0751\ \pi R_{GB}(2/3R_{GB}^2-1.21\ R_{WT}^2)$$

$W_T$=total weight of the components lifted by the gas bag

$\varepsilon$=an arbitrary moderate lift, found by successive approximation by varing $R_{GB}$, to ensure moderate tension on the tethers. An $\varepsilon\approx10\ R_{WT}$ was used in the following calculations.

For each successive approximation of $R_{GB}$, an approximate value of a is first assumed, $\varepsilon$ is calculated and a revised value of a is found from

$$a=(1/2(R_{GB}-R_{WT})/2R_{GB})100=25(1-R_{WT}/R_{GB})$$

Then $\varepsilon$ is recalculated using this revised value of a and this process is iterated until $\varepsilon$ meets the above criterion. Then the component costs are estimated and summed, and the sum $\$_T$ is divided by $\overline{P}$.
Let

$$W_T=W_{GB}+W_{WT}+W_{GEN}+W_{FRAME}+W_{TETHERS}+W_{LINE}+W_{FLAPS}$$

and let $\overline{d}$ be the unit weight for each component to be lifted by the gas bag.
Then

$$W_{GB}=\overline{d}_{GB}A_{GB}=\overline{d}_{GB}(2\pi R_{GB}^2+\pi R_{GB}^2-2\pi(1.1R_{WT})^2+2\pi(1.1R_{WT})R_{GB})^3$$

where the factor 3 is included to account for the compartmentation of the gas bag necessary to prevent one puncture causing catastrophic damage. Then

$$W_{GB}=\overline{d}_{GB}(3\pi(R_{GB}(3R_{GB}+2.2R_{WT})-2.42\ R_{WT}^2)) \qquad \text{Let } \overline{d}_{GB}=0.1\ \text{lb/ft}^2=0.488\ \text{kg/m}^2$$
$$W_{WT}=\overline{d}_{WT}2R_{WT} \qquad \text{Let } \overline{d}_{WT}=R_{WT}/4\ \text{lb/ft}=0.372\ R_{WT}\ \text{kg/m}$$
$$W_{GEN}=\overline{d}_{GEN}P \qquad \text{Let } \overline{d}_{GEN}=5\ \text{lb/KW}=2.268\ \text{kg/kw}$$
$$W_{FRAME}=3\ \overline{d}_{FRAME}R_{GB} \qquad \text{Let } \overline{d}_{FRAME}=R_{WT}/2\ \text{lb/ft}=0.744\ R_{WT}\ \text{kg/m}$$
$$W_{TETHERS}=3\ \overline{a}_1\ \overline{d}_{TETHERS} \qquad \text{Let } \overline{a}_1=3\ R_{WT}$$
$$\qquad\qquad\qquad\qquad\qquad\qquad \text{Let } \overline{d}_{TETHERS}=R_{WT}/100\ \text{lb/ft}=0.015\ R_{WT}\ \text{kg/m}$$
$$W_{LINE}=\overline{d}_{LINE}2R_{WT} \qquad \text{Let } \overline{d}_{LINE}=R_{WT}/50\ \text{lb/ft}=0.03\ R_{WT}\ \text{kg/m}$$
$$W_{FLAPS}=\overline{d}_{FLAPS}2\pi R_{GB} \qquad \text{Let } \overline{d}_{FLAPS}=R_{WT}/10\ \text{lb/ft}=0.149\ R_{WT}\ \text{kg/m}$$

$$W_T=0.1\ A_{GB}+R_{WT}^2(0.5+0.09+0.04)+R_{WT}R_{GB}(1.5+0.2\pi)+5\overline{P}$$
$$=0.1\ A_{GB}+0.63\ R_{WT}^2+2.128\ R_{WT}R_{GB}+5\overline{P}$$

Let

$$\$_T=\$_{GB}+\$_{WT}+\$_{GEN}+\$_{FRAME}+\$_{TETHERS}\$_{LINE}+\$_{FLAPS}+\$_{TCS}+\$_{H_2}+\$_{H_2GEN}+\$_{CRADLE}$$

and let $\overline{C}$ be the production model unit costs for each component of the TAWECS system, both those to be lifted by the gas bag, and the ground supported components.

Then

$\$_{GB} = \overline{C}_{GB} A_{GB}$      Let $\overline{C}_{GB} = 0.2$ and $0.5$ \$/ft$^2$ ($1ft^2 = 0.092$ m$^2$)

$\$_{WT} = 2\,\overline{C}_{WT} R_{WT}$      Let $\overline{C}_{WT} = R_{WT}$ \$/ft

$\$_{GEN} = \overline{C}_{GEN} \overline{P}$      Let $\overline{C}_{GEN} = 50$ \$/KW

$\$_{FRAME} = 3\,\overline{C}_{FRAME} R_{GB}$      Let $\overline{C}_{FRAME} = R_{WT}/2$ \$/ft ($1$ ft $= 0.305$ m)

$\$_{TETHERS} = 3\,\overline{C}_{TETHERS} a_1$      Let $\overline{C}_{TETHERS} = R_{WT}/100$ \$/ft

$\$_{LINE} = \overline{C}_{LINE}(2R_{WT} + 4R_{WT})$      Let $\overline{C}_{LINE} = R_{WT}/25$ \$/ft

$\$_{FLAPS} = \overline{C}_{FLAPS} 2\pi R_{GB}$      Let $\overline{C}_{FLAPS} = R_{WT}/5$ \$/ft

$\$_{TCS} = \$_{Control\ System} + 3\,\overline{C}_{Winch\ and\ Motor}$      Let $\$_{Control\ Sys} = \$300;$

     Let $\overline{C}_{Winch\ and\ Motor} = 4\ R_{WT}$ \$/Winch and Motor

$\$_{H_2} = \overline{C}_{H_2} Vol_{GB}$      Let $\overline{C}_{H_2} = 0.02$ \$/ft$^3$ ($1ft^3 = 0.027$ m$^3$)

$\$_{H2GEN} = \overline{C}_{H2GEN} R_{WT}^3$      Let $\overline{C}_{H2GEN} = 0.05$ \$/ft$^3$

$\$_{CRADLE} = 3 R_{WT}$

$$\$_T = \overline{C}_{GB} A_{GB} + 0.02\ Vol_{GB} + 0.05\ R_{WT}^3 +$$
$$R_{WT}^2(2 + 0.09 + 0.24 + 3) + R_{WT} R_{GB}(1.5 + 0.4\pi) + 300 + 12\ R_{WT} + 50\ \overline{P}$$

$$= \overline{C}_{GB} A_{GB} + 0.02\ Vol_{GB} + 0.05\ R_{WT}^3 + 5.33\ R_{WT}^2 + 2.756\ R_{WT} R_{GB} + 300 + 12\ R_{WT} + 50\ \overline{P}$$

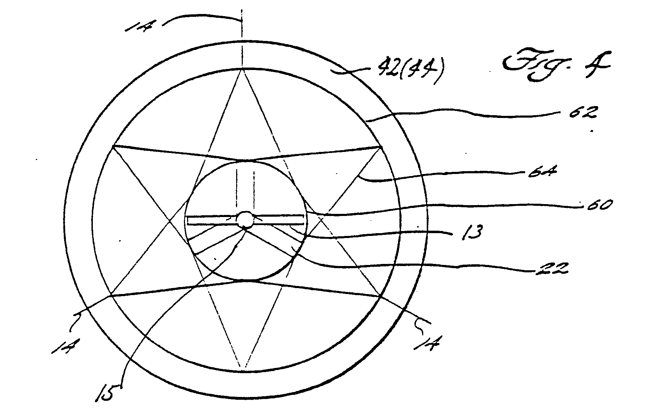

Using these equations provides the data in Figures 3a and 3b, which indicate that this TAWECS configuration should produce power economically, but there may be little or no economic advantage to large values of $R_{WT}$. However, all the assumed values for component unit weights and costs are subject to revision, and the increase in $\$_T/\overline{P}$ is probably due to too large an assumed unit cost (and/or unit weight) for at least one component. Even if the unit costs are too low by a factor of $1/2-1/5$, $\$_T/\overline{P}$ should be economic for either power grid or remote site applications.

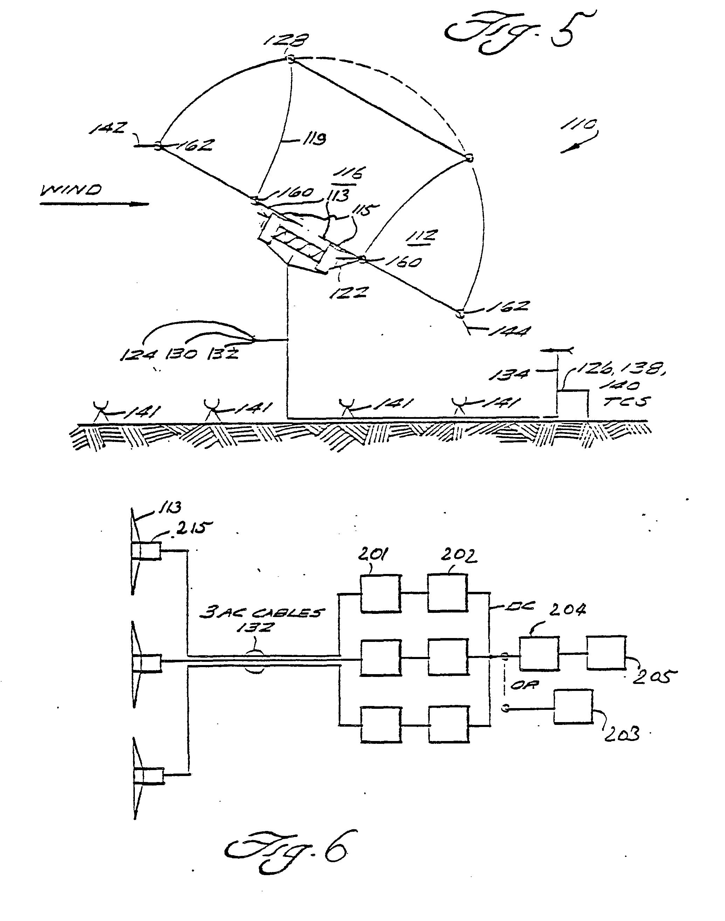

Figure 4 relates to a second embodiment of the invention in which there is provided an alternative to the metal ring 46 of the embodiment of Figures 2, 3a and 3b. Figure 4 shows the second embodiment in schematic top plan view of the level of the gas bag base. Two metal rings 60, 62 may be used, made of shaped steel or aluminum (e.g., tubular), with spokes 64 in tension between the rings to support the inner ring 60. The outer ring 62 supports the flaps 42, 44. The inner ring supports a three-arm frame 22' which supports the wind turbine 13 and the generator 15. The gas bag is connected to both rings to support the TAWECS components borne aloft. The gas bag should be constructed in sections of about 30° per section, or less, each section self-contained, to minimize damage and gas loss from one puncture. The section vertical sides and bottoms may be black plastic or fabric, with transparent hemispherical section tops, to warm the hydrogen inside by solar radiation and greenhouse effect, and increase lift by decreasing the density of the hydrogen. The gas bag sections connect at the top center to a circular member such as a tube (not shown) which supports the hydrogen release valve, the aircraft warning lights, if required, and the lightning rods. With these structural changes in the TAWECS, the previous calculations are modified as follows:

$W_{Outer\ Ring} = \overline{d}_{OR} 2\pi R_{GB}$      Let $\overline{d}_{OR} = R_{WT}/3$ lb/ft $= 0.496\ R_{WT}$ kg/m

$W_{Inner\ Ring} = \overline{d}_{IR} 2\pi(1.1 R_{WT})$      Let $\overline{d}_{IR} = R_{WT}/6$ lb/ft $= 0.248\ R_{WT}$ kg/m

$W_{FRAME} = 3\,\overline{d}_{FRAME}(1.2 R_{WT})$      Let $\overline{d}_{FRAME} = R_{WT}/2$ lb/ft $= 0.744\ R_{WT}$ kg/m

$W_{Spokes} = 2(6)\,\overline{d}_{Spokes}(1.1 R_{GB})$      Let $\overline{d}_{Spokes} = R_{WT}/50$ lb/ft $= 0.03\ R_{WT}$ kg/m

$W_{GB} = \overline{d}_{GB} A_{GB}$      Let $\overline{d}_{GB} = 0.1$ lb/ft$^2 = 0.488$ kg/m$^2$

where

$$A_{GB} = \pi(R_{GB}(3R_{GB} + 2.2R_{WT}) - 2.42R_{WT}^2) + 2\ (12)\ (\pi R_{GB}^2/4 - R_{GB}\ (1.1\ R_{WT}))$$
$$= \pi(R_{GB}(9R_{GB} + 2.2R_{WT}) - 2.42R_{WT}^2) - 26.4 R_{GB} R_{WT}$$
$$= \pi(R_{GB}(9R_{GB} - 6.19R_{WT}) - 2.42R_{WT}^2)$$

Then

$$W_T = W_{GB} + W_{OR} + W_{FLAPS} + W_{IR} + W_{Spokes} + W_{FRAME} + W_{WT} + W_{GEN} + W_{TETHERS} + W_{LINE}$$

$$W_T = 0.1 A_{GB} + R_{WT}^2(1.1/3\pi + 1.8 + 0.5 + 0.09 + 0.04) + R_{WT} R_{GB}(2/3\pi + 0.2\pi + 13.2/50) + 5\overline{P}$$
$$= 0.1 A_{GB} + 3.58 R_{WT}^2 + 2.99 R_{WT} R_{GB} + 5\overline{P}$$

$\$_{OR} = \overline{C}_{OR} 2\pi R_{GB}$      Let $\overline{C}_{OR} = R_{WT}/3$ \$/ft ($1$ ft $= 0.3048$ m)

$\$_{IR} = \overline{C}_{IR} 2\pi(1.1\ R_{WT})$      Let $\overline{C}_{IR} = R_{WT}/6$ \$/ft

$\$_{Frame} = 3\,\overline{C}_{Frame}\ (1.2\ R_{WT})$      Let $\overline{C}_{Frame} = R_{WT}/2$ \$/ft

$\$_{Spokes} = 12\,\overline{C}_{Spokes}\ (1.1\ R_{GB})$      Let $\overline{C}_{Spokes} = R_{WT}/50$ \$/ft

$\$_{GB} = \overline{C}_{GB} A_{GB}$      Let $\overline{C}_{GB} = 0.2$ and $0.5$ \$/ft$^2$ ($1$ ft$^2 = 0.092$ m$^2$)

$\$_{Cradle} = 6\,\overline{C}_{Cradle}$      Let $\overline{C}_{Cradle} = R_{WT}/2$ \$/Cradle

Then

$$\$_T=\$_{GB}+\$_{OR}+\$_{Flaps}+\$_{IR}+\$_{Spokes}+\$_{Frame}+$$
$$\$_{WT}+\$_{GEN}+\$_{Tethers}+\$_{Line}+\$_{TCS}+H_2+\$_{H_2Gen}+\$_{Cradle}$$
$$=\overline{C}_{GB}A_{GB}+0.02\ Vol_{GB}+0.05\ R_{WT}^3+R_{WT}^2\ (1.1/3\pi+1.8+2+0.09+0.24)+$$
$$R_{WT}R_{GB}\ (2/3\pi+0.2\pi+13.2/50)+50\ \overline{P}+300+R_{WT}\ (12+3)$$
$$=\overline{C}_{GB}A_{GB}+0.02\ Vol_{GB}+0.05\ R_{WT}^3+R_{WT}\ (5.28\ R_{WT}+2.99R_{GB}+15)+300+50\ \overline{P}$$

Using these modified equations, significant decreases in $\$_T\ /\overline{P}$ are obtained when compared with Figure 3 (approximately 23% for $\overline{V}_w=10$ mph=16.09 km/h and 12% for $\overline{V}_w=15$ mph=24.14 km/h.

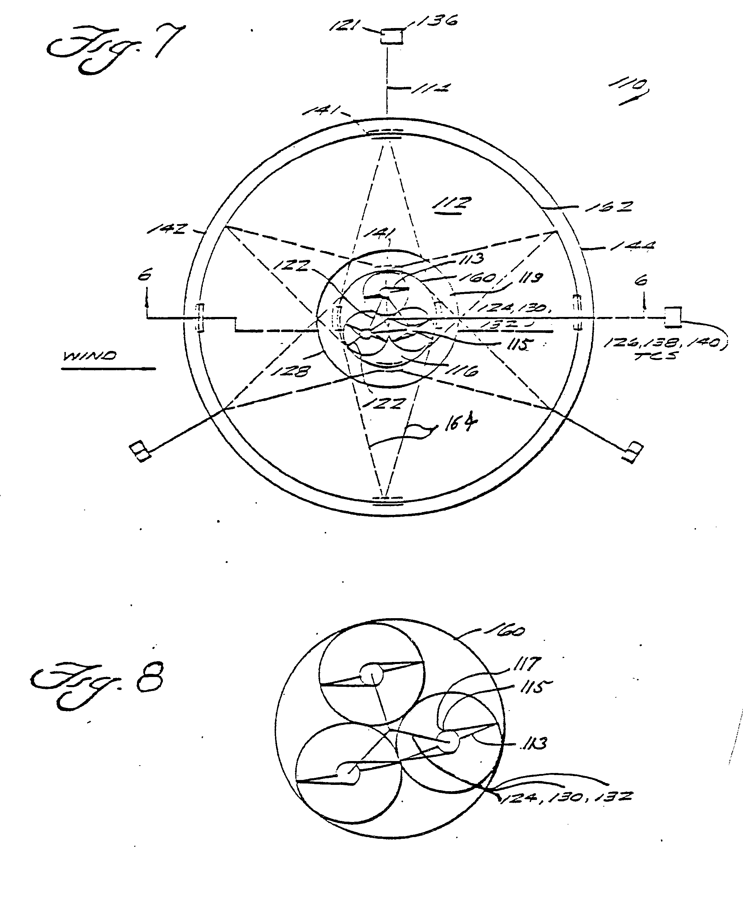

For the TAWECS of Figures 2 and 5, with $R_{GB}=3\ R_{WT}$ and a confined vortex generated and sustained, the volume of hydrogen necessary for $\varepsilon=10\ R_{WT}$ may be found by solving for it in

$$Lift-W_T=\varepsilon$$

Let $a=20$, $\alpha=30°$, and $\overline{P}=$twice the power produced by a TAWECS without a confined vortex. Let air at a pressure slightly greater than ambient fill the volume of the gas bag not required by the hydrogen. Making these changes,

$$\overline{P}=0.001837\ R_{WT}^2\overline{V}_w^3$$
$$A_{GB}=\pi(3\ R_{WT}(27\ R_{WT}-6.19\ R_{WT})-2.42\ R_{WT}^2)=60\pi R_{WT}^2$$
$$W_T=0.1\ A_{GB}+12.55\ R_{WT}^2+5\ \overline{P}=(10.37+12.55)\ R_{WT}^2+5\ P=22.92\ R_{WT}^2+5\ \overline{P}$$
$$Lift=0.0751\ Vol_{H_2}=W_T+10\ R_{WT}$$
$$Vol\ H_2=13.32\ (22.92\ R_{WT}^2+5\ \overline{P}+10\ R_{WT})$$
$$\$_T=\overline{C}_{GB}A_{GB}+0.02\ Vol\ H_2+0.05\ R_{WT}^3+R_{WT}\ (14.25\ R_{WT}+15)+300+50\ \overline{P}$$

Using these equations, the data obtained show a decrease in $\$_T\ /\overline{P}$ when compared with the TAWECS of Figures 2 and 4 of approximately 22% for $\overline{V}_w=10$ mph=16.09 km/h and 7% for $\overline{V}_w=15$ mph=24.14 km/h. Whether or not this case is in fact more economic than that of the first embodiment will be determined by the strength of the vortex (if any) that is generated and sustained, which can only be determined by further experiment.

In Figure 2, the TAWECS is shown disposed over a flat terrain surface. It would be apparent that a hilltop site is included in the purview of the invention, even preferred, since wind velocity is generally greater at such sites.

The TAWECS could be assembled on a relatively flat terrain surface, inflated, and then moved to a relatively inaccessible site for installation, such as a hilltop, marsh, or over water by using one helicopter per tether.

To decrease the weight and cost of the generator connected to the wind turbine, a synchro generator could be used, connected electrically to a synchro motor on the ground at some convenient distance away, which is then connected to the load (electrical or mechanical).

It should now be apparent that the present invention provides a tethered airfoil wind energy conversion system preferably incorporating the following features and advantages:

A flexible gas bag support which

a. Provides a maximum ratio of camber/chord, which produces a maximum pressure drop across the vent containing the wind turbine, thus maximizing the power produced by the wind turbine;

b. Provides a means of eliminating ice and snow buildup;

c. Allows wind turbines probably limited in size only by the wind turbine vanes;

d. May provide in one configuration a confined vortex above the wind turbine to further increase the pressure drop across the wind turbine; and

A tether control system to keep the hemispheric gas bag airfoil oriented into the wind from any direction at an optimum angle of attack to maximize power output.

There are many forms of airfoils for aircraft applications employing reduced pressure on the suction side and increased pressure on the pressure side (as described in any aerodynamics text). A variety of gas bag shapes employing these basic principles may be used for wind turbine applications in place of the hemispherical form shown.

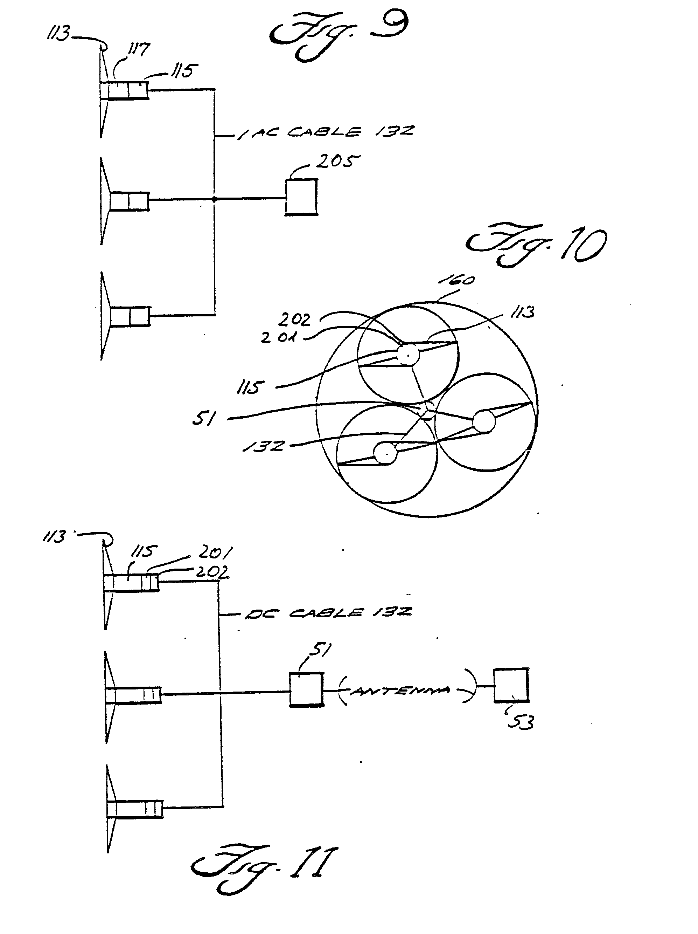

In Figures 5—7 there is shown simply and schematically depicted a multiple wind turbine tethered airfoil wind energy conversion system (a MWT-TAWECS) 110.

In this embodiment, a gas bag three-dimensional body of revolution airfoil 112 shown as an approximately hemispherical shape for simplicity is filled with enough lighter-than-air gas, e.g., hydrogen to lift the TAWECS components and provide a moderate tension on the three tethers 114. Thus, the gas bag airfoil 112 is borne aloft with its rounded surface pointed generally upwards and its generally flat underside pointed generally downwards. Towards its geometric center and generally parallel to its longitudinal axis, the gas bag airfoil is provided with a tubular vent 116, having an upper end opening up through the rounded surface of the gas bag and a lower end opening down through the generally flat surface of the gas bag. At its lower end, the vent 116 has a plurality of wind turbines 113 "WT" mounted so as to be rotated by the wind.

A preferred diffuser augmenter is shown at 119, being a specific configuration of the vent sidewall for augmenting the pressure drop across the wind turbines, in order to increase the power output and decrease the equipment cost per unit of power produced. In order to provide the diffuser augmenter, the radius of the vent is increased exponentially from bottom to top.

For the purpose of mounting the wind turbines at the bottom of the vent a framework is mounted to the airfoil by any convenient means. This framework preferably includes two metal rings 160, 162, made of shaped steel or aluminum (e.g. tubular), with spokes 164 in tension between them so that the outer ring 162 supports the inner ring 160 from the airfoil via the tensioned spokes 164. The outer ring 162 also supports flaps 142, 144 and the inner ring supports the frame structure 122 which supports the wind turbines 113 and the electric generators 115 which are driven by the wind turbines 113. The gas bag may be connected to both rings 160, 162, e.g. by means of hold-down lines (not shown) or a net (not shown) extending over the gas bag.

The leading and trailing edge flaps 142, 144 act to increase the camber, coefficient of lift, and optimum angle of attack of the airfoil.

The gas bag, by being flexible, should prevent ice and snow buildup, by being free to deflect in six modes: roll, pitch, yaw, heave, sway and surge. Since gas bags may be of almost arbitrary size, it is likely that the size limitation is determined by the wind turbine vanes, and 150-foot (=45,72 m) vanes are now under development by others. A hemispherical airfoil produces maximum camber/chord ratio, maximizing pressure drop across the WT's, and thus maximizes power produced.

The hemispherical hydrogen-supported gas bag is tethered by three or more lines 114, which are adjusted by winches driven by motors 121 controlled by a tether control system TCS to control the tilt of the gas bag 112 into the wind, such that the angle of attack $\alpha$ is optimum up to at least 30° to maximize the pressure drop across the wind turbines WT. Each tether 114 ends at the outer ring 162, at a terminating point for spokes 164. In addition to those components already mentioned, at least one service line 124 is provided from the bottom of the electric generators 115 to the ground, and along the ground a distance greater than the radius of the gas bag, to provide hydrogen replenishment from a hydrogen generator 126 on the ground, power for aircraft warning lights, if required, control signals for hydrogen release valve 128 in the top of the gas bag, control signals for pitch control of the WT vanes, lightning ground cable 130 and a power output cable 132. In the version shown in Figures 5—7 there may be provided three service lines 124. In the version shown in Figures 8 and 9, the individual service lines combine aloft into one common line that extends down to the ground. In either version, each service line 124 may be led along one of the tether lines 114, instead of vertically to the ground. This will enable placing two or more MWT-TAWECS one above the other at particularly desirable (windy) sites. The power output cable of service line 124 may be replaced with a microwave transmitter 51 in the TAWECS and a microwave receiver 53 on the ground (as shown in Figures 10 and 11).

A wind direction indicator 134 is required on the ground to supply a wind direction-representing signal to the TCS, which calculates the required lengths of the respective tethers 114 to tilt the MWT-TAWECS into the wind at its optimum angle of attack to maximize power output. Control signals are then sent to the three tether winch motor controllers 136 to set the individual tether lengths in accordance with these calculations. To this purpose the tether control system TCS may incorporate commercially available, inexpensive microprocessors, as explained in more detail in my aforesaid copending application.

For sites with a constant wind direction, the tether lines may be of predetermined fixed lengths to orient the airfoil into the wind at an optimum angle of attack. At such sites no winches would be required to lengthen and shorten the tether lines, no wind direction sensing means is required, and no tether control system is required. In such a case, the winches may be replaced with fixed tie-down means being disposed around the airfoil on the ground in any distributed configuration.

The hydrogen generator 126 may be of several known types, which produce hydrogen by electrolysis of water (possibly obtained from condensed water vapor in the air), or by the process described in US—A—4 075 313, or by other means.

The hydrogen generators 126 must have a storage tank 138 and reserve capacity enough for a heavy snow or ice load accumulating during a period of no wind, to provide the extra lift required to keep the gas bag aloft with moderate tension on the tethers. The hydrogen generators may supply hydrogen not only to the airfoil, but elsewhere as an end product of the MWT-TAWECS. The hydrogen generators may be borne aloft by the airfoil. The tether control system TCS must sense tension on the tethers, and open the hydrogen supply valve 140 when tension becomes too low. The tether control system TCS must also sense excessive tension on the tethers, and open a release valve 128 in the top of the gas bag to release excess hydrogen to lower the tension on the tethers. The tether control system TCS must also provide for manual control of the tether winch motors for use in lowering the MWT-TAWECS for maintenance, which would require sufficient control to settle the framework including rings 160, 162 gently into a special cradle 141.

In lieu of electric generators 115, the wind turbines 113 may drive one or more flexible shafts (not shown) connected to a mechanical load (not shown) or respective mechanical loads (not shown) on the ground.

The gas bag should be constructed in sections of about 30° per section, or less, with each section being self-contained, to minimize damage and gas loss from one puncture. The section vertical sides and bottoms may be black plastic or fabric, with transparent hemispherical section tops, to warm the hydrogen

8

inside by solar radiation and greenhouse effect, and increase lift by decreasing the density of the hydrogen. The gas bag sections connect at the top center to a circular member such as a tube (not shown) which supports the hydrogen release valve, the aircraft warning lights, if required, and the lightning rods. The MWT-TAWECS is shown disposed over a flat terrain surface. It should be apparent that a hilltop site is included in the purview of the invention, even preferred, since wind velocity is generally greater at such sites.

The MWT-TAWECES could be assembled on a relatively flat terrain surface, inflated, and then moved to a relatively inaccessible site for installation, such as a hilltop, marsh, or over water by using one helicopter per tether.

To decrease the weight and cost of the generators connected to the wind turbines, synchro generators could be used, connected electrically to one or more synchro motors on the ground at some convenient distance away, each of which is then connected to a load (electrical or mechanical).

If the electrical outputs of the generators 115 of the individual wind turbines 113 are to be integrated and supplied to a load (e.g. a common power grid) an electrical power integrating means is needed. Fortunately several such means are commercially available. In particular,

(a) The generators 115 may be individual constant voltage DC generators parallel connected to the same power output cable (or to a DC load on the ground, such as a water hydrolysis hydrogen generator (not shown in detail)).

(b) Unsynchronized AC generators 215, which currently are cheaper than DC generators, may be connected in parallel through individual power output cables 132 to rectifiers 201 and filters 202 located on the ground, and thence to either a DC load 203 or, through an inverter 204, to an AC load 205.

(c) AC generators 115 synchronized to the power grid frequency and connected through a common power output cable to the power grid. This requires the use of a gear box 117 or the like between each wind turbine 113 and the respective generator 115 that is associated therewith. Each gear box 117 transforms the actual angular rotation output of the associated wind turbine 113 to that required for the respective synchronized AC generator. The power output from each generator can then be fed through a common power output bus to the ground for voltage and current transformation, if necessary, and connection to the grid.

(d) A plurality of variable voltage DC generators connected through separate power output cables to separate DC loads on the ground, or to separate synchronous inverters on the ground, and thence to the power grid or the AC load.

All these electrical integration technologies are well known. A useful summary thereof is provided in the paper "Electrical Technology Overview and Research at Oklahoma State University as Applied to Wind Energy Systems", R. Ramakumar et al, published in Proceedings of the Second Workshop on Wind Energy Conversion Systems, F. R. Eldrige, editor, 1975, Mitre Corp. report RAN—75-0500.

Although the MWT-TAWECS 110 of Figures 5—7 is shown having three wind turbines 113, a greater or lesser number of similarly clustered wind turbines could be employed; for example, the number of wind turbines provided in the vent may be two, three, seven (e.g. six encircling one), or nineteen. My current preference is for three wind turbines 113 as illustrated in Figures 5—7, and the use of generator option (c) explained hereinabove.

It should now be apparent that the present invention provides a multiple wind turbine tethered airfoil wind energy conversion system preferably incorporating the following features and advantages:

A flexible gas bag support which:

a. provides a maximum ratio of camber/chord, which produces a maximum pressure drop across the vent containing the wind turbines, thus maximizing the power produced by the wind turbines,

b. provides a means of eliminating ice and snow buildup,

c. allows wind turbines probably limited in size only by the wind turbine vanes,

d. provides a diffuser augmenter above the wind turbines to further increase the pressure drop across the wind turbines, and

e. provides a tether control system to keep the hemispheric gas bag airfoil oriented into the wind from any direction at an optimum angle of attack to maximize power output.

There are many forms of airfoils for aircraft applications employing reduced pressure on the suction side and increased pressure on the pressure side (as described in any aerodynamics text). A variety of gas bag shapes employing these basic principles may be used in place of the hemispherical form shown.

**Claims**

1. A tethered airfoil wind energy conversion system (10; 110) comprising
a lighter-than-air gas-filled airfoil (12; 112),
at least one wind turbine (13; 113) having a power output-providing device,
frame means (22; 122) supported by said airfoil (12; 112) and mounting said wind turbine for rotating relative to said airfoil (12; 112),
at least three tether lines (14; 114) connecting said airfoil conversion system (10; 110) to connecting means at the other end of said tether lines (14; 114), said tether lines (14; 114) being attached to said airfoil (12; 112) distally of the longitudinal axis thereof,

9

0 033 318

said airfoil (12; 112) comprises a vent (16; 116) extending completely generally axially therethrough, said wind turbine (13; 113) is mounted in axial alignment with said vent (16; 116), and

said each connecting means comprise a ground-based tether line payout/takeup device (21; 121), characterized in

that said tether lines (14; 114) being angularly widely distributed, each separately attached to said airfoil (12; 112), and

that said ground-based tether payout/takeup devices (21; 121) may be individually operated to increase and decrease the length of the individual tether lines (14; 114) effectively in use, for tilting the wind turbine (13; 113) into the wind.

2. Tethered airfoil wind energy conversion system according to claim 1, characterized in that said airfoil (12; 112) is a flexible gas bag-type airfoil.

3. Tethered airfoil wind energy conversion system according to claim 1 or 2, characterized in that each payout/takeup device (21; 121), comprises a motorized, individually operable winch, said at least three payout/takeup devices (21; 121) being for disposition at spaced sites generally in an imaginary ring on the ground and each such winch having a tether line (14; 114) wound thereon and having a respective outer end.

4. Tethered airfoil wind energy conversion system according to one of the claims 1 through 3, characterized by a means (26; 126) for supplying inflating lighter-than-air gas from within the airfoil, this means including a gas release control valve (28; 128).

5. Tethered airfoil wind energy conversion system according to one of the claims 1 through 4, characterized by means for controlling the pitch of the wind turbine vanes.

6. Tethered airfoil wind energy conversion system according to one of the claims 1 through 5, characterized by means (34; 134) for sensing wind direction incident upon said airfoil (12; 112) and for providing an output signal in relation thereto.

7. Tethered airfoil wind energy conversion system, according to one of the claims 1 through 6, characterized by a tether control system incorporating means for determining for each of a plurality of various different wind direction-related output signals received from said sensing means, respective control signal equating to the amounts by which each of the respective tether lines (14; 114) must be reeled in or played out in order to tilt the airfoil (12; 112) into the wind at an optimum angle of attack to maximize power output of said power output-providing device of said wind turbine (13; 113).

8. Tethered airfoil wind energy conversion system, according to claim 7, characterized by means operatively connecting said sensing means to said tether control system for furnishing said output signal to said tether control system and by means operatively connecting said tether control system to each of said winches for furnishing said respective control signals to the respective said winches.

9. Tethered airfoil wind energy conversion system according to one of the claims 1 through 8, characterized in that the airfoil (12; 112) is of a generally hemispherical shape, base generally downwards, with said wind turbine (13; 113) being mounted generally at the lower end of said vent (16; 116).

10. Tethered airfoil wind energy conversion system according to one of the claims 1 through 9, characterized by flap means (42; 44; 142; 144) skirting said airfoil (12; 112) at the base thereof.

11. Tethered airfoil wind energy conversion system according to one of the claims 7 through 10, characterized in that said tether control system operates in use to tilt said airfoil (12; 112) at an angle $\alpha$ of up to about 30° from horizontal, headed into the wind.

12. Tethered airfoil wind energy conversion system according to one of the claims 1 through 11, characterized in that the interior sidewall (18) of said vent (16) is superficially lined with ridge means (20) spiralling thereabout along the length thereof for creating a vortex of the wind passing therethrough.

13. Tethered airfoil wind energy conversion system according to one of the claims 4 through 12, characterized in that said means (26; 126) for supplying inflating lighter-than-air gas to the airfoil (12; 112) includes a gas generator.

14. Tethered airfoil wind energy conversion system according to claim 13, characterized in that said gas generator is a hydrogen generator (26; 126).

15. Tethered airfoil wind energy conversion system according to claim 14, characterized in that said hydrogen generator (26; 126) is borne aloft by said airfoil (12; 112).

16. Tethered airfoil wind energy conversion system according to claim 14 or 15, characterized in that said hydrogen generator (26; 126) constitutes at least part of said power output-providing devices by having a capacity, when in use, to provide substantially more hydrogen, as an output product, than is required for providing inflating gas for said airfoil; and

means for taking off excess hydrogen from said hydrogen generator (26; 126) as an output product.

17. Tethered airfoil wind energy conversion system according to one of the claims 4 through 16, characterized by means communicated to said tether lines (14; 114), said tether control system, and said control valves (28, 40; 128, 140), for sensing the tension on said tether lines (14; 114) and for admitting inflating gas to said airfoil (12; 112) and for releasing inflating gas from the airfoil for maintaining said tension within a preselected range.

18. Tethered airfoil wind energy conversion system according to one of the claims 1 through 17, characterized in that each power output-providing device comprises a rotary-driven electrical generator (15; 115; 215) operatively coupled to said wind turbine (13; 113).

10

19. Tethered airfoil wind energy conversion system according to claim 18, characterized in that said airfoil electrical generator (15; 115; 215) is supported aloft by said airfoil (12; 112).

20. Tethered airfoil wind energy conversion system according to claim 19, characterized by a respective service line (24, 124) connected with each said electrical generator (15; 115; 215) and extending therefrom for taking-off electrical power generated by operation of said electrical generator (15; 115; 215).

21. Tethered airfoil wind energy conversion system according to claim 20, characterized in that each service line (24, 124) extends to the ground along one of the tether lines (14; 114).

22. Tethered airfoil wind energy conversion system according to one of the claims 19 through 21, characterized by means for transmitting electrical power of generated by operation of said electrical generator (15; 115; 215) to remotely of said electrical generator (15; 115; 215).

23. Tethered airfoil wind energy conversion system according to claim 22, characterized in that said transmitting means is constituted by a microwave transmitter (51) supported by said airfoil (12; 112) and a microwave receiver (53) located on the ground.

24. Tethered airfoil wind energy conversion system according to one of the claims 1 through 23, characterized in that each power output-providing device comprises a rotary shaft.

25. Tethered airfoil wind energy conversion system according to claim 24, characterized in that said rotary shaft is flexible.

26. Tethered airfoil wind energy conversion system according to one of the claims 9 through 25, characterized in that said airfoil (12; 112) is internally divided into a plurality of individual compartments by internal wall means, in order to prevent one puncture catastrophic loss of inflating gas from said airfoil.

27. Tethered airfoil wind energy conversion system according to claim 26, characterized in that said internal wall means comprises a plurality of internal walls of flexible sheet extending perpendicularly to said base and radially of said vent (16; 116) at about 30° intervals.

28. Tethered airfoil wind energy conversion system according to claim 27, characterized in that said base and said internal walls are relatively dark-colored and, wherein the remainder of said airfoil (12; 112) is relatively transparent for enhancing warming by solar radiation of inflating gas contained in said airfoil (12; 112).

29. Tethered airfoil wind energy conversion system according to one of the claims 1 through 28, characterized in that said means coaxially mounting said wind turbine (13) comprises three arms and a ring, of which the three arms extend from the wind turbine (13) generally radially outwards to said ring and said ring extends about the outer periphery of the airfoil.

30. Tethered airfoil wind energy conversion system according to one of the claims 1 through 29, characterized in that said means coaxially mounting said wind turbine (13) comprises three arms extending from said wind turbine (13) to the base of said vent (16; 116), a ring (60; 160) having said three arms joined thereto at the base of said vent (16; 116); an outer ring (62; 162) extending around the outer periphery of the airfoil (12; 112) and a plurality of tensioned mechanical tie means (64; 164) interconnecting the inner and outer rings at a plurality of angularly spaced points.

31. Tethered airfoil wind energy conversion system according to one of the claims 1 through 30, characterized by a cradle (41; 141) disposed on the ground beneath said airfoil (12; 112); and means for guidingly lowering said airfoil down onto said cradle (41; 141) to a non-use position thereon.

32. Tethered airfoil wind energy conversion system according to one of the claims 17 through 31, characterized by control means connected to all of effectively lengthening and shortening means and being operable to coordinately modify said distances by shortening at least one and/or lengthening at least another for selectively tilting the axis and thus heading the wind turbine (13; 113) into the wind.

33. Tethered airfoil wind energy conversion system according to one of the claims 1 through 32, characterized by anchor means for each tether line (14; 114); the tether lines (14; 114) between the respective first ends thereof and the respective said anchor means associated therewith, being equipped to be maintainable to at least two different effective lengths so that in use the tether lines (14; 114) will not all extend down from the airfoil (12; 112) to where the respective tether lines (14; 114) are respectively anchored by said anchor means, unless the airfoil (12; 112) tilts, whereby the vent (16; 116) is aimed relative to the wind, for regulating the acceptance of wind energy by a wind energy conversion device.

34. Tethered airfoil wind energy conversion system according to one of the claims 1 through 33, characterized in that the longitudinal axis of the wind turbine is at least generally vertically oriented and included in the azimuthal direction in the suspended state.

35. Tethered airfoil wind energy conversion system according to one of the claims 18 through 34, characterized in that said system includes means (32; 132) for communicating said converted power output to a ground site off-board said airfoil (12; 112).

36. Tethered airfoil wind energy conversion system according to claim 1, characterized by comprising at least three wind turbines (113) each being mounted by frame means (122) and each being axially aligned so as to be substantially parallel with said vent (116).

37. Tethered airfoil wind energy conversion system according to one of the claims 1 through 36, characterized in that said vent (116) increases exponentially in radius from bottom to top in order to provide a diffuser augmenter (119).

38. Tethered airfoil wind energy conversion system according to claim 36 or 37, characterized by means for integrating the output of all of said generators (115; 215) and for providing the resultant output to an electrical distribution grid.

39. Tethered airfoil wind energy conversion system according to one of the claims 36 through 38, characterized in that said frame means is constituted by a unitary frame for all of said wind energy conversion devices.

**Patentansprüche**

1. Mit Seilen gehaltenes Tragflächen-Windenergie-Umwandlungssystem (10; 110), welches
eine mit einem Gas, welches leichter als Luft ist, gefüllte Tragfläche (12; 112),
wenigstens eine Windturbine (13; 113), welche eine Energieabgabevorrichtung aufweist,
eine Rahmenvorrichtung (22; 122), welche von der Tragfläche (12; 112) gehalten wird und die Windturbine zur Drehung relativ zu der Tragfläche (12; 112) trägt,
mindestens drei Halteseile (14; 114) aufweist, welche das Energie-Umwandlungssystem (10; 110) mit Verbindungsvorrichtungen am anderen Ende der Halteseile (14; 114) verbindet, wobei die Halteseile (14; 114) im Abstand von der Längsachse der Tragfläche (12; 112) an dieser festgelegt sind,
wobei die Tragfläche (12; 112) einen Luftkanal (16; 116) aufweist, die sich vollständig generell axial durch sie hindurcherstreckt,
wobei die Windturbine (13; 113) in axialer Ausrichtung mit dem Luftkanal (16; 116) angeordnet ist, und
wobei jede der Verbindungsvorrichtungen eine am Boden angeordnete Halteseil-Ausfahr/Einzieh-Vorrichtung (21; 121) aufweist,
dadurch gekennzeichnet,
daß die Halteseile (14; 114) über einen größeren Winkelbereich verteilt angeordnet sind, wobei jedes separat mit der Tragfläche (12; 112) verbunden ist, und
daß die am Boden angeordneten Halteseil-Ausfahr/Einzieh-Vorrichtungen (21; 121) individuell betätigt werden können, um die Länge der einzelnen effektiv benützten Halteseile (14; 114) zum schräg in den Wind Stellen der Windturbine (13; 113) zu verlängern und zu verkürzen.

2. Mit Seilen gehaltenes Tragflächen-Windenergie-Umwandlungssystem nach Anspruch 1, dadurch gekennzeichnet, daß die Tragfläche (12; 112) von der Art einer dehnbaren Gashüllen-Tragfläche ist.

3. Mit Seilen gehaltenes Tragflächen-Windenergie-Umwandlungssystem nach Anspruch 1 oder 2, dadurch gekennzeichnet, daß jede Ausfahr/Einzieh-Vorrichtung (21; 121) eine motorisierte einzeln betätigbar Winde aufweist, wobei die mindestens drei Ausfahr/Einzieh-Vorrichtungen (21; 121) voneinander getrennt generell auf einem imaginären Ring am Boden angeordnet sind, und wobei jede der Winden ein Halteseil (14; 114) darauf aufgewickelt und ein entsprechendes äußeres Ende aufweisen.

4. Mit Seilen gehaltenes Tragflächen-Windenergie-Umwandlungssystem nach einem der Ansprüche 1 bis 3, gekennzeichnet durch eine Vorrichtung (26; 126) zur Zuführung von aufblasendem Gas, welches leichter als Luft ist, von innerhalb der Tragfläche, wobei diese Vorrichtung ein Gasablaß-Steuerventil (28; 128) aufweist.

5. Mit Seilen gehaltenes Tragflächen-Windenergie-Umwandlungssystem nach einem der Ansprüche 1 bis 4, gekennzeichnet durch eine Einrichtung zur Steuerung der Neigung der Windturbinenschaufeln.

6. Mit Seilen gehaltenes Tragflächen-Windenergie-Umwandlungssystem nach einem der Ansprüche 1 bis 5, gekennzeichnet durch eine Vorrichtung (34; 134) zur Erfassung der auf die Tragfläche (12; 112) einfallenden Windrichtung und zur Bereitstellung eines dazu entsprechenden Ausgangssignals.

7. Mit Seilen gehaltenes Tragflächen-Windenergie-Umwandlungssystem nach einem der Ansprüche 1 bis 6, gekennzeichnet durch ein Halteseil-Steuersystem, welches eine Vorrichtung zur Bestimmung von einem entsprechenden Steuersignal für jedes aus einer Vielzahl verschiedener windrichtungsabhängiger Ausgangssignale von der Erfassungsvorrichtung beinhaltet, welches den Beträgen entspricht, um welche die einzelnen Halteseile (14; 114) eingezogen oder nachgelassen werden müssen, um die Tragfläche (12; 112) mit einem optimalen Angriffswinkel derart in den Wind zu kippen, daß die Energieabgabe der Energieabgabevorrichtung der Windturbine (13; 113) maximiert wird.

8. Mit Seilen gehaltenes Tragflächen-Windenergie-Umwandlungssystem nach Anspruch 7, gekennzeichnet durch eine Vorrichtung, welche betrieblich die Erfassungsvorrichtung mit dem Halteseil-Steuersystem verbindet zur Lieferung des Ausgangssignals zu dem Halteseil-Steuersystem, und durch eine Vorrichtung, welche betrieblich das Halteseil-Steuersystem mit jeder der Winden verbindet, um den einzelnen Winden die entsprechenden Steuersignale zu liefern.

9. Mit Seilen gehaltenes Tragflächen-Windenergie-Umwandlungssystem nach einem der Ansprüche 1 bis 8, dadurch gekennzeichnet, daß die Tragfläche (12; 112) von allgemeiner Halbkugelform ist, wobei ihre Basisfläche generell nach unten zeigt, wobei die Windturbine (13; 113) generell am unteren Ende des Luftkanals (16; 116) angeordnet ist.

10. Mit Seilen gehaltenes Tragflächen-Windenergie-Umwandlungssystem nach einem der Ansprüche 1 bis 9, gekennzeichnet durch die Klappenvorrichtung (42; 44; 142; 144), welche die Tragfläche (12; 112) an deren Basisfläche säumt.

11. Mit Seilen gehaltenes Tragflächen-Windenergie-Umwandlungssystem nach einem der Ansprüche 7 bis 10, dadurch gekennzeichnet, daß das Halteseil-Steuersystem im Betrieb so arbeitet, daß es die

# 0 033 318

Tragfläche (12; 112) um einen Winkel a von bis zu 30° gegenüber der Horizontalen geneigt in den Wind stellt.

12. Mit Seilen gehaltenes Tragflächen-Windenergie-Umwandlungssystem nach einem der Ansprüche 1 bis 11, dadurch gekennzeichnet, daß die innere Seitenwand (18) des Luftkanals (16) an ihrer Oberfläche mit einer Rippenvorrichtung (20) versehen ist, welche sich spiralförmig um den Luftkanal und entlang seiner Länge erstreckt, um einen starken Wirbel des hindurchströmenden Windes zu erzeugen.

13. Mit Seilen gehaltenes Tragflächen-Windenergie-Umwandlungssystem nach einem der Ansprüche 4 bis 12, dadurch gekennzeichnet, daß die Vorrichtung (26; 126) zur Zuführung von aufblasendem Gas zu der Tragfläche (12; 112), welches leichter als Luft ist, einen Gaserzeuger umfaßt.

14. Mit Seilen gehaltenes Tragflächen-Windenergie-Umwandlungssystem nach Anspruch 13, dadurch gekennzeichnet, daß der Gaserzeuger ein Wasserstoffgenerator (26; 126) ist.

15. Mit Seilen gehaltenes Tragflächen-Windenergie-Umwandlungssystem nach Anspruch 14, dadurch gekennzeichnet, daß der Wasserstoffgenerator (26; 126) von der Tragfläche (12; 112) in der Luft hängend gehalten wird.

16. Mit Seilen gehaltenes Tragflächen-Windenergie-Umwandlungssystem nach Anspruch 14 oder 15, dadurch gekennzeichnet, daß der Wasserstoffgenerator (26; 126) wenigstens einen Teil der Energieabgabevorrichtungen durch die Möglichkeit bildet, daß er im Betrieb wesentlich mehr Wasserstoff als Ausgabeprodukt liefert, als es für das die Tragfläche aufblasende Gas erforderlich ist; und daß eine Vorrichtung zur Ableitung von überschüssigem Wasserstoff als Abgabeprodukt von dem Wasserstoffgenerator (26; 126) vorgesehen ist.

17. Mit Seilen gehaltenes Tragflächen-Windenergie-Umwandlungssystem nach einem der Ansprüche 4 bis 16, gekennzeichnet durch eine mit den Halteseilen (14; 114), dem Halteseil-Steuersystem und den Steuerventilen (28, 40; 128, 140) verbundene Vorrichtung zum Erfassen der Spannung auf die Halteseile (14; 114) und zur Zuführung von aufblasendem Gas zu und Abführung des Gases von der Tragfläche (12; 112), um die Spannung in einem vorgewählten Bereich zu halten.

18. Mit Seilen gehaltenes Tragflächen-Windenergie-Umwandlungssystem nach einem der Ansprüche 1 bis 17, dadurch gekennzeichnet, daß jede Energieabgabevorrichtung einen drehbeweglich angetriebenen Elektrizitätsgenerator (15; 115; 215) aufweist, der betrieblich mit der Windturbine (13; 113) verbunden ist.

19. Mit Seilen gehaltenes Tragflächen-Windenergie-Umwandlungssystem nach Anspruch 18, dadurch gekennzeichnet, daß Tragflächen-Elektrizitätsgenerator (15; 115; 215) von der Tragfläche (12; 112) in der Luft hängend gehalten wird.

20. Mit Seilen gehaltenes Tragflächen-Windenergie-Umwandlungssystem nach Anspruch 19, gekennzeichnet durch eine entsprechende Anschlußleitung (24; 124), welche mit jedem der elektrizitätsgeneratoren (15; 115; 215) verbunden ist und sich von ihnen wegerstreckt zur Abnahme von elektrischer Energie, welche beim Betrieb des Elektrizitätsgenerators (15; 115; 215) erzeugt wird.

21. Mit Seilen gehaltenes Tragflächen-Windenergie-Umwandlungssystem nach Anspruch 20, dadurch gekennzeichnet, daß jede Anschlußleitung (24; 124) sich zum Boden entlang eines der Halteseile (14; 114) erstreckt.

22. Mit Seilen gehaltenes Tragflächen-Windenergie-Umwandlungssystem nach einem der Ansprüche 19 bis 21, gekennzeichnet durch eine Übertragungseinrichtung, welche die durch den im Betrieb des Elektrizitätsgenerators (15; 115; 215) erzeugte elektrische Energie in eine Entfernung zu dem Elektrizitätsgenerator (15; 115; 215) überträgt.

23. Mit Seilen gehaltenes Tragflächen-Windenergie-Umwandlungssystem nach Anspruch 22, dadurch gekennzeichnet, daß die Übertragungseinrichtung von einem Mikrowellen-Sender (51), der von der Tragfläche (12; 112) getragen wird und einem Mikrowellen-Empfänger (53) gebildet wird, welcher am Boden angeordnet ist.

24. Mit Seilen gehaltenes Tragflächen-Windenergie-Umwandlungssystem nach einem der Ansprüche 1 bis 23, dadurch gekennzeichnet, daß jede Energie-Abgabevorrichtung eine Drehwelle aufweist.

25. Mit Seilen gehaltenes Tragflächen-Windenergie-Umwandlungssystem nach Anspruch 24, dadurch gekennzeichnet, daß die Drehwelle biegsam ist.

26. Mit Seilen gehaltenes Tragflächen-Windenergie-Umwandlungssystem nach einem der Ansprüche 9 bis 25, dadurch gekennzeichnet, daß die Tragfläche (12; 112) in ihrem Inneren in eine Mehrzahl von einzelnen Kammern mittels innerer Wandeinrichtungen geteilt ist, um einen punktuellen katastrophalen Abfluß des aufblasenden Gases aus der Tragfläche zu vermeiden.

27. Mit Seilen gehaltenes Tragflächen-Windenergie-Umwandlungssystem nach Anspruch 26, dadurch gekennzeichnet, daß die innere Wandeinrichtung eine Vielzahl von inneren Wänden aus biegsamen dünnen Platten aufweist, welche sich senkrecht zu der Basisfläche und radial bezüglich des Luftkanals (16; 116) in 30° Abständen erstrecken.

28. Mit Seilen gehaltenes Tragflächen-Windenergie-Umwandlungssystem nach Anspruch 27, dadurch gekennzeichnet, daß die Basisfläche und die inneren Wände relativ dunkelfarbig ausgebildet sind, worin der Rest der Tragfläche (12; 112) relativ durchsichtig ist, zur Verstärkung der durch Sonnenbestrahlung erfolgenden Erwärmung des aufblasenden Gases, welches in der Tragfläche (12; 112) enthalten ist.

29. Mit Seilen gehaltenes Tragflächen-Windenergie-Umwandlungssystem nach einem der Ansprüche 1 bis 28, dadurch gekennzeichnet, daß die die Windturbine (13) koaxial anordnende Vorrichtung drei Arme

13

**0 033 318**

und einen Ring aufweist, wobei sich die drei Arme von der Windturbine (13) generell radial nach außen zu dem Ring erstrecken, und wobei der Ring sich um den Außenumfang der Tragfläche erstreckt.

30. Mit Seilen gehaltenes Tragflächen-Windenergie-Umwandlungssystem nach einem der Ansprüche 1 bis 29, dadurch gekennzeichnet, daß die die Windturbine (13) koaxial anordnende Vorrichtung drei Arme, welche sich von der Windturbine (13) zu der Basis des Luftkanals (16; 116) erstrecken, einen Ring (60; 160), mit dem die drei Arme an der Basis des Luftkanals (16; 116) verbunden sind; einen äußeren Ring (62; 162), der sich am Außenumfang der Tragfläche (12; 112) erstreckt und eine Mehrzahl von gespannten mechanischen Haltevorrichtungen (64; 164) aufweist, welche die inneren und äußeren Ringe in einer Vielzahl von über einen großen Winkelbereich verteilten Punkten miteinander verbinden.

31. Mit Seilen gehaltenes Tragflächen-Windenergie-Umwandlungssystem nach einem der Ansprüche 1 bis 30, gekennzeichnet durch ein am Boden unterhalb der Tragfläche (12; 112) angeordnetes Gestell (41; 141); und durch eine Vorrichtung, welche die Tragfläche führend auf das Gestell (41; 141) in eine Außer-Betrieb-Stellung darauf herabläßt.

32. Mit Seilen gehaltenes Tragflächen-Windenergie-Umwandlungssystem nach einem der Ansprüche 17 bis 31, gekennzeichnet durch eine Steuervorrichtung, welche mit allen der wirksamen Verlängerungs- und Verkürzungsvorrichtungen verbunden ist und so betätigbar ist, um die Abstände koordinierend durch Verkürzung von wenigstens einer und/oder Verlängerung von wenigstens einer anderen zu ändern, um selektiv die Achse zu neigen und dadurch die Windturbine (13; 113) in den Wind zu heben.

33. Mit Seilen gehaltenes Tragflächen-Windenergie-Umwandlungssystem nach einem der Ansprüche 1 bis 32, gekennzeichnet durch eine Ankervorrichtung für jedes der Halteseile (14; 114); wobei die Halteseile (14; 114) zwischen den einzelnen ersten Enden der Seile und den entsprechenden zugehörigen Ankervorrichtungen so ausgestaltet sind, daß sie bei wenigstens zwei unterschiedlichen wirksamen Längen haltbar sind, so daß im Betrieb die Halteseile (14; 114) sich nicht alle von der Tragfläche (12; 112) nach unten erstrecken, wo die einzelnen Halteseile (14; 114) von den entsprechenden Ankervorrichtungen verankert sind, wenn nicht die Tragfläche (12; 112) geneigt ist, wodurch der Luftkanal (16; 116) in den Wind gebracht wird zur Regelung der Aufnahme von Windenergie durch eine Windenergie-Umwandlungsvorrichtung.

34. Mit Seilen gehaltenes Tragflächen-Windenergie-Umwandlungssystem nach einem der Ansprüche 1 bis 33, dadurch gekennzeichnet, daß die Längsachse der Windturbine wenigstens generell vertikal ausgerichtet ist und sich in der Azimuthal-Richtung im hängenden Zustand befindet.

35. Mit Seilen gehaltenes Tragflächen-Windenergie-Umwandlungssystem nach einem der Ansprüche 18 bis 34, dadurch gekennzeichnet, daß das System eine Kommunkationsvorrichtung (32; 132) aufweist, zur Übertragung der umgewandelten Energieabgabe zu einer Bodenstation, welche sich nicht an der Tragfläche (12; 112) befindet.

36. Mit Seilen gehaltenes Tragflächen-Windenergie-Umwandlungssystem nach Anspruch 1, dadurch gekennzeichnet, daß es mindestens drei Windturbinen (113) aufweist, wobei jede durch eine Rahmenvorrichtung (122) gehalten wird, und wobei jede so axial ausgerichtet ist, daß sie sich im wesentlichen parallel zu dem Luftkanal (116) befindet.

37. Mit Seilen gehaltenes Tragflächen-Windenergie-Umwandlungssystem nach einem der Ansprüche 1 bis 36, dadurch gekennzeichnet, daß der Radius des Luftkanals (116) sich exponentiell von unten nach oben vergrößert, um einen Diffusor (119) zu bilden.

38. Mit Seilen gehaltenes Tragflächen-Windenergie-Umwandlungssystem nach Anspruch 36 oder 37, gekennzeichnet durch eine Vorrichtung zur Zusammenfassung der Abgabe aller Generatoren (115; 215) und zur Zuführung der daraus resultierenden Abgabe zu einem Verteilernetz.

39. Mit Seilen gehaltenes Tragflächen-Windenergie-Umwandlungssystem nach einem der Ansprüche 36 bis 38, dadurch gekennzeichnet, daß die Rahmenvorrichtung aus einem Einzelrahmen für alle der Windenergie-Umwandlungsvorrichtungen gebildet ist.

**Revendications**

1. Système de conversion d'énergie éolienne à surface portante retenu par des câbles (10; 110) comprenant

une surface portante (12; 112) remplie de gaz plus léger que l'air,

au moins une turbine éolienne (13; 113) munie d'un dispositif de dégagement d'énergie,

un dispositif-cadre (22; 122) tenu par ladite surface portante (12; 112) et portant ladite turbine éolienne pour rotation par rapport à ladite surface portante (12; 112),

au moins trois câbles de retenue (14; 114) reliant ledit système de conversion d'énergie (10; 110) à des dispositifs de connexion se trouvant à l'autre extrémité desdits câbles de retenue (14; 114), lesdits câbles de retenue étant fixés à ladite surface portante (12; 112) à distance de son axe longitudinal,

ladite surface portante (12; 112) comprenant un canal d'air (16; 116) s'étendant généralement entièrement, de manière axiale, à travers elle, ladite turbine éolienne (13; 113) étant montée en alignement axial avec ledit canal d'air (16; 116), et

chaque dispositif de connexion comprenant un dispositif de sortie/entrée de cable de retenue (21; 121) placé sur le sol caractérisé en ce que lesdits cables de retenue (14; 114) sont répartis à larges intervalles angulaires, chacun d'eux étant fixé séparément sur ladite surface portante (12; 112) et que lesdits

**0 033 318**

dispositifs de sortie/entrée de cable de retenue (21; 121) peuvent être actionnés individuellement de manière à rallonger ou raccourcir la longueur des différents cables de retenue (14; 114) effectivement utilisés pour incliner la turbine éolienne (13; 113) dans le vent.

2. Système de conversion d'énergie éolienne à surface portante retenu par des câbles selon la revendication 1, caractérisé en ce que ladite surface portante est une surface portante de type sac flexible rempli de gaz.

3. Système de conversion d'énergie éolienne à surface portante retenu par des câbles selon la revendication 1 ou 2, caractérisé en ce que chaque dispositif de sortie/entrée (21; 121) comprend un treuil motorisé pouvant être actionné individuellement, les—au moins—trois dispositifs de sortie/entrée séparés les uns des autres étant généralement fixés sur un cercle imaginaire sur le sol et chacun de ces treuils enroulant un câble de retenue (14; 114) et comprenant une extrémité extérieure correspondante.

4. Système de conversion d'énergie éolienne à surface portante retenu par des câbles selon l'une des revendications 1 à 3, caractérisé par un dispositif (26; 126) d'approvisionnement de gaz insufflé plus léger que l'air de l'intérieur de la surface portante, ce dispositif incluant une vanne-pilote de sortie de gaz (28; 128).

5. Système de conversion d'énergie éolienne à surface portante retenu par des câbles selon l'une des revendications 1 à 4, caractérisé par un dispositif de contrôle d'inclinaison des aubes de la turbine éolienne.

6. Système de conversion d'énergie éolienne à surface portante retenu par des câbles selon l'une des revendications 1 à 5, caractérisé par un dispositif (34; 134) pour détecter la direction du vent faisant incidence sur ladite surface portante (12; 112) et pour approvisionner un signal de sortie correspondant.

7. Système de conversion d'énergie éolienne à surface portante retenu par des câbles selon l'une des revendications 1 à 6, caractérisé par un système de contrôle des cables de retenue comprenant un dispositif servant à déterminer un signal de contrôle correspondant pour chacun des différents signaux de sortie dépendant de la direction du vent du dispositif de détection, signal correspondant aux montants desquels les différents câbles de retenue doivent être resserrés ou relâchés pour incliner la surface portante (12; 112) avec un angle d'attaque optimal de manière à maximaliser la sortie d'énergie du dispositif de sortie d'énergie de la turbine éolienne (13; 113).

8. Système de conversion d'énergie éolienne à surface portante retenu par des câbles selon la revendication 7, caractérisé par un dispositif reliant opérationnellement ledit dispositif de détection audit système de contrôle de câble de retenue pour approvisionner ledit signal de sortie audit système de contrôle de câble de retenue et par un dispositif connectant opérationnellement ledit système de contrôle de câble de retenue à chacun des treuils pour fournir lesdits signaux de contrôle respectifs aux treuils correspondants.

9. Système de conversion d'énergie éolienne à surface portante retenu par des câbles selon l'une des revendications 1 à 8, caractérisé en ce que la surface portante (12; 112) a généralement une forme hémisphérique, la base se trouvant généralement vers le bas, et ladite turbine éolienne (13; 113) étant généralement fixée sur l'extrémité inférieure dudit canal d'air (16; 116).

10. Système de conversion d'énergie éolienne à surface portante retenu par des câbles selon l'une des revendications 1 à 9, caractérisé par un dispositif à clapet (42; 44; 142; 144) bordant ladite surface portante (12; 112) à sa base.

11. Système de conversion d'énergie éolienne à surface portante retenu par des câbles selon l'une des revendications 7 à 10, caractérisé en ce que le système de contrôle de câble de retenue en opération fonctionne de manière à ce que la surface portante (12; 112) soit inclinée dans le vent avec un angle $\alpha$ de 30° maximum par rapport à l'horizontale.

12. Système de conversion d'énergie éolienne à surface portante retenu par des câbles selon l'une des revendications 1 à 11, caractérisé en ce que la paroi latérale.intérieure (18) du canal d'air (16) est munie sur sa surface supérieure d'un dispositif à nervures (20) s'étendant en forme de spirale autour et le long du canal d'air pour créer un fort tourbillon du vent passant à travers lui.

13. Système de conversion d'énergie éolienne à surface portante retenu par des câbles selon l'une des revendications 4 à 12, caractérisé en ce que le dispositif (26; 126) de conduite de gaz insufflé plus léger que l'air à la surface portante (12; 112) comprend un générateur de gaz.

14. Système de conversion d'énergie éolienne à surface portante retenu par des câbles selon la revendication 13, caractérisé en ce que le générateur de gaz est un générateur d'hydrogène (26; 126).

15. Système de conversion d'énergie éolienne à surface portante retenu par des câbles selon la revendication 14, caractérisé en ce que le générateur d'hydrogène (26; 126) est suspendu en l'air et tenu par la surface portante (12; 112).

16. Système de conversion d'énergie éolienne à surface portante retenu par des câbles selon la revendication 14 ou 15, caractérisé en ce que le générateur d'hydrogène (26; 126) constitue au moins une partie desdits dispositifs de dégagement d'énergie par la possibilité, lorsqu'il est en opération, de fournir beaucoup plus d'hydrogène qu'il n'est nécessaire pour le gaz insufflant la surface portante; et qu'il est prévu un dispositif pour enlever l'hydrogène excédentaire dudit générateur d'hydrogène (26; 126) comme produit de dégagement.

17. Système de conversion d'énergie éolienne à surface portante retenu par des câbles selon l'une des revendications 4 à 16, caractérisé par un dispositif relié auxdits câbles de retenue (14; 114), audit système de contrôle de câble et auxdites valves de contrôle (28; 40; 128; 140) pour détecter la tension dans lesdits

15

**0 033 318**

câbles de retenue (14; 114), pour amener le gaz insufflé à ladite surface portante (12; 112) et pour évacuer le gaz insufflé de la surface portante pour maintenir ladite tension dans un domaine présélectionné.

18. Système de conversion d'énergie éolienne à surface portante retenu par des câbles selon l'une des revendications 1 à 17, caractérisé en ce que chaque dispositif de sortie d'énergie comprend un générateur électrique à commande rotative (15; 115; 215) relié opérationnellement à ladite turbine éolienne (13; 113).

19. Système de conversion d'énergie éolienne à surface portante retenu par des câbles selon la revendication 18, caractérisé en ce que le générateur électrique de surface portante (15; 115; 215) est suspendu en l'air par ladite surface portante (12; 112).

20. Système de conversion d'énergie éolienne à surface portante retenu par des câbles selon la revendication 19, caractérisé par une conduite de raccordement correspondante (24; 124) connectée à chaque générateur électrique (15; 115; 215) et s'étendant de là pour prendre l'énergie électrique produite par la fonctionnement dudit générateur électrique (15; 115; 215).

21. Système de conversion d'énergie éolienne à surface portante retenu par des câbles selon la revendication 20, caractérisé en ce que chaque conduite de raccordement (24; 124) s'étend jusqu'au sol le long d'un des câbles de retenue (14; 114).

22. Système de conversion d'énergie éolienne à surface portante retenu par des câbles selon l'une des revendications 19 à 21, caractérisé par un dispositif de transmission de l'énergie électrique produite par le fonctionnement dudit générateur électrique (15; 115; 215) à une distance dudit générateur électrique (15; 115; 215).

23. Système de conversion d'énergie éolienne à surface portante retenu par des câbles selon la revendication 22, caractérisé en ce que ledit dispositif de transmission est constitué par un émetteur à micro-ondes (51) porté par ladite surface portante (12; 112) et un récepteur à micro-ondes (53) situé sur le sol.

24. Système de conversion d'énergie éolienne à surface portante retenu par des câbles selon l'une des revendications 1 à 23, caractérisé en ce que chaque dispositif de dégagement d'énergie comprend un arbre rotatif.

25. Système de conversion d'énergie éolienne à surface portante retenu par des câbles selon la revendication 24, caractérisé en ce que ledit arbre rotatif est flexible.

26. Système de conversion d'énergie éolienne à surface portante retenu par des câbles selon l'une des revendications 9 à 25, caractérisé en ce que ladite surface portante (12; 112) est divisée à l'intérieur en une pluralité de compartiments individuels par des dispositifs muraux internes pour empêcher une perte ponctuelle catastrophique de gaz insufflé de ladite surface portante.

27. Système de conversion d'énergie éolienne à surface portante retenu par des câbles selon la revendication 26, caractérisé en ce que ledit dispositif mural interne comprend de nombreuses parois internes en plaques fines souples s'étendant perpendiculairement à ladite base et radialement par rapport audit canal d'air (16; 116) à environ 30° d'intervalle.

28. Système de conversion d'énergie éolienne à surface portante retenu par des câbles selon la revendication 27, caractérisé en ce que ladite base et lesdites parois internes sont de couleur relativement foncée, le reste de ladite surface portante (12; 112) étant relativement transparent pour accroître la chaleur produite par l'ensoleillement du gaz insufflé contenu dans ladite surface portante (12; 112).

29. Système de conversion d'énergie éolienne à surface portante retenu par des câbles selon l'une des revendications 1 à 28, caractérisé en ce que ledit dispositif plaçant coaxialement ladite turbine éolienne (13) comprend trois bras et un anneau, les trois bras s'étendant de la turbine éolienne (13) généralement radialement vers l'extérieur dudit anneau et ledit anneau s'étendant autour de la périphérie extérieure de la surface portante.

30. Système de conversion d'énergie éolienne à surface portante retenu par des câbles selon l'une des revendications 1 à 29, caractérisé en ce que ledit dispositif plaçant coaxialement ladite turbine éolienne (13) comprend trois bras s'étendant de ladite turbine éolienne (13) à la base dudit canal d'air (16; 116), un anneau (60; 160) ayant lesdits trois bras joints à la base du canal d'air (16; 116); un anneau extérieur (62; 162) s'étendant autour de la périphérie extérieure de la surface portante (12; 112) et de nombreux dispositifs de retenue mécaniques tendus (64; 164) reliant les anneaux extérieurs et intérieurs à de nombreux points séparés les uns des autres de manière angulaire.

31. Système de conversion d'énergie éolienne à surface portante retenu par des câbles selon l'une des revendications 1 à 30, caractérisé par un bâti (41; 141) disposé sur le sol en dessous de ladite surface portante (21; 121) et par un dispositif abaissant en la guidant ladite surface portante sur ledit bâti (41; 141) jusqu'à une position de non-fontionnement.

32. Système de conversion d'énergie éolienne à surface portante retenu par des câbles selon l'une des revendications 17 à 31, caractérisé par un dispositif de contrôle relié à tous les dispositifs effectifs de rallongement et de raccourcissement et pouvant être actionné pour modifier en les coordonnant lesdites distances en raccourcissant au moins un et/ou en rallongeant au moins un autre pour incliner l'axe de manière sélective et ainsi relever la turbine éolienne (13; 113) dans le vent.

33. Système de conversion d'énergie éolienne à surface portante retenu par des câbles selon l'une des revendications 1 à 32, caractérisé par un dispositif d'ancrage pour chacun des câbles de retenue (14; 114); les câbles de retenue (14; 114) entre les différentes premières extrémités des câbles et les dispositifs d'ancrage correspondants y associés étant conçus pour pouvoir être maintenus à au moins deux

16

**0 033 318**

différentes longueurs effectives de manière à ce que les câbles de retenue en opération (14; 114) ne s'étendent pas tous vers le bas de la surface portante (12; 112) vers l'endroit où les différents câbles de retenue (14; 114) sont respectivement ancrés par lesdits dispositifs d'ancrage, à moins que la surface portante (12; 112) soit penchée, ce qui tourne le canal d'air (16; 116) dans le vent pour régler l'entrée d'énergie éolienne par un dispositif de conversion d'énergie éolienne.

34. Système de conversion d'énergie éolienne à surface portante retenu par des câbles selon l'une des revendications 1 à 33, caractérisé en ce que l'axe longitudinal de la turbine éloienne est au moins généralement orienté de façon verticale et se trouve en direction azimuthale à l'état suspendu.

35. Système de conversion d'énergie éolienne à surface portante retenu par des câbles selon l'une des revendications 18 à 34, caractérisé en ce que ledit système inclue un dispositif (32; 132) pour transmettre ladite sortie d'énergie convertie à une station au sol ne se trouvant pas dans ladite surface portante (12; 112).

36. Système de conversion d'énergie éolienne à surface portante retenu par des câbles selon la revendication 1, caractérisé en ce qu'il comprend au moins trois turbines éoliennes (113), chacune d'elles étant tenue par un dispositif-cadre (122) et chacune étant placée axialement de manière à être généralement parallèle au canal d'air (116).

37. Système de conversion d'énergie éolienne à surface portante retenu par des câbles selon l'une des revendications 1 à 36, caractérisé en ce que le rayon dudit canal d'air (116) s'accroît de façon exponentielle de bas vers le haut de manière à former un diffuseur.

38. Système de conversion d'énergie éolienne à surface portante retenu par des câbles selon la revendication 36 ou 37, caractérisé par un dispositif pour intégrer la sortie de tous lesdits générateurs (115; 215) et fournir la sortie en résultant à un réseau de distribution électrique.

39. Système de conversion d'énergie éolienne à surface portante retenu par des câbles selon l'une des revendications 36 à 38, caractérisé en ce que ledit dispositif-cadre est constitué par un cadre unitaire pour tous les dispositifs de conversion d'énergie éolienne.

17

Fig. 1

GEN  WT  FAB SUPPORT RING

FAB

FAB

TWR

GUY

$H-h_b$  H

PTWR

$h_b$

$R_{WT}$  B

Fig. 2

10

46

16

13  20

42  28

12

WIND

18

14  15

22

44

∝  $P_w$  14

H  $R_{GB}$

34

30, 32  26  38

21  TCS  40

36  $R_B$

Fig. 3a

Fig. 3b

Fig. 4

*Fig. 5*

*Fig. 6*

4

Fig. 7

Fig. 8

5

*Fig. 9*

*Fig. 10*

AC CABLE 132

205

160
202
201
113
115
51
132

*Fig. 11*

113
115
201
202

DC CABLE 132

51

ANTENNA

53